# EUROPÄISCHE PATENTSCHRIFT

(11) **EP 3 784 469 B1**
(45) Veröffentlichungstag und Bekanntmachung des Hinweises auf die Patenterteilung: **06.07.2022**
(21) Anmeldenummer: 19719515.9
(22) Anmeldetag: 25.04.2019
(51) Int. Cl.: B29C 49/46, B29C 49/06, B29K 67/00, B29L 31/00, B29C 49/36, B29C 49/12

(54) **STERILISIERBARE BLASLUFTWEGE UND RECKSTANGE EINER BLASMASCHINE**
STERILIZABLE BLOWING AIR PATHS AND STRETCH ROD OF A BLOW-MOULDING MACHINE
VOIES D'AIR DE SOUFFLAGE STÉRILISABLES ET POINÇON D'ÉTIRAGE D'UNE MACHINE DE SOUFFLAGE

(30) Priorität: 26.04.2018 DE 102018110036
(43) Veröffentlichungstag der Anmeldung: 03.03.2021
(73) Patentinhaber: Krones AG, 93073 Neutraubling (DE)
(72) Erfinder: SÖLLNER, Jürgen, 93073 Neutraubling (DE); GELTINGER, Florian, 93073 Neutraubling (DE); WERKMANN, Kevin, 93073 Neutraubling (DE)
(74) Vertreter: Bittner, Bernhard
(86) Internationale Anmeldenummer: PCT/EP2019/060567
(87) Internationale Veröffentlichungsnummer: WO 2019/207025

(56) Entgegenhaltungen:
- EP-A1- 2 692 506
- EP-A2- 2 388 126
- US-A1- 2016 324 998
- US-A1- 2017 197 352

## Beschreibung

Die vorliegende Erfindung bezieht sich auf Vorrichtung zum Umformen von Kunststoffvorformlingen zu Kunststoffbehältnissen, wobei hier lediglich ausgewählte Teilbereiche mit einem Sterilisationsmedium beaufschlagt werden.

Dokument EP2692 506A1 zeigt eine Vorrichtung 1 und ein Verfahren zum Umformen
von Kunststoffvorformlingen 10 mit einem beweglichen Träger 2, an dem eine Vielzahl von Umformungsstationen 8 angeordnet ist, wobei jede Umformungsstation 8 eine Beaufschlagungseinrichtung 70 aufweist, welche die Kunststoffvorformlinge 10 zu deren Expansion mit einem gasförmigen Medium beaufschlagt. Die Umformungsstationen 8 werden dabei über wenigstens eine Verbindungsleitung 74, 66 mit dem gasförmigen Medium zur Expansion der Kunststoffvorformlinge 10 versorgt.

Dokument EP 2 388 126 A2 zeigt eine Blasmaschine mit Zuleitungssterilisation. Eine Vorrichtung zum Umformen von Kunststoffvorformlingen zu Kunststoffbehältnissen 10 weist dabei eine Beaufschlagungseinrichtung 6 auf, welche die Behältnisse 10 mit einem fließfähigen Medium beaufschlagt, um diese zu expandieren. Dabei ist weiterhin ein Reservoir 8 zum Aufbewahren des fließfähigen Mediums und eine Zuführungsleitung 12 vorgesehen, welche das fließfähige Medium von dem Reservoir 8 zu dem Behältnis 10 fördert sowie eine Ventileinrichtung 4a, 4b, 4c, welche die Zufuhr des fließfähigen Mediums in die Behältnisse steuert 10. Die Vorrichtung 1 weist dabei insbesondere eine erste Zuleitung 20 auf, um der Zuführungsleitung 12 zwischen dem Reservoir 8 und dem zu behandelnden Behältnis 10 oder einer Abführleitung für das fließfähige Medium, welche das fließfähige Medium von den Behältnissen 10 abführt, ein fließfähiges Sterilisationsmedium zuzuführen.

Dokument US 2017/197352 A1 zeigt weiterhin ein Verfahren und eine Blasformungsmaschine zur Herstellung von biasgeformten, sterilen Behältern 2. Hierzu wird ein Vorformling 1 innerhalb einer Blasstation 3 von einer Reckstange 11 gereckt und über eine Blasdüse 10 mit einem unter Druck stehenden Blasfluid beaufschlagt. Zudem wird dem Vorformling 1 in der Blasstation 3 zur Ausführung einer Sterilisierung ein Sterilisationsfluid zugeführt, wobei das Sterilisationsfluid in der Blasstation aus einem Auslass in den Vorformling eingespeist und über einen Einlass wieder abgeführt wird und dazwischen einen Strömungsweg durchläuft, wobei das Sterilisationsfluid auf seinem Strömungsweg durch die Reckstange 11 hindurch- oder an der Reckstange vorbeigeführt wird. Die Zuführung des Sterilisationsfluides erfolgt dabei im laufenden Betrieb der Blasformungsmaschine, wobei ein kontinuierlicher Fluss an Sterilisationsfluid erzeugt wird, der entlang des Vorformlings und der Reckstange und der Blasdüse geführt ist. Das Sterilisationsfluid wird dabei über die Reckstange zugeführt.

Im internen Stand der Technik der Anmelderin sind verschiedene Vorrichtungen mit einer Sterilisationseinrichtung bekannt. So ist es beispielsweise bekannt, dass es Vorrichtungen gibt, welche den höchsten Anforderungen der Sterilisation genügen. Um diesen Anforderungen gerecht zu werden, werden bei solchen Vorrichtungen nahezu alle Vorrichtungselemente einer Sterilisation unterzogen. Auch ist es bekannt, dass derartige Vorrichtungen innerhalb eines Reinraums angeordnet sein können. Derartige Vorrichtungen bringen den Nachteil mit sich, dass sie sehr kostenintensiv, sowohl in der Herstellung als auch im laufenden Betrieb sind.

Neben diesen hochsterilen Vorrichtungen sind im internen Stand der Technik der Anmelderin auch Vorrichtungen bekannt, welche mit einer weitaus geringeren Sterilisation arbeiten. Dabei wird beispielsweise lediglich ein Kunststoffvorformling sterilisiert. Da die restlichen Anlagenbereiche, welche unter Umständen mit dem sterilisierten Kunststoffvorformling in Kontakt kommen nicht sterilisiert werden beziehungsweise diese nicht steril sind, liegt hier ein erhöhtes Risiko der Wiederverkeimung vor.

Die Aufgabe der vorliegenden Erfindung liegt darin, die Nachteile aus dem bekannten Stand der Technik zu überwinden. Dabei soll eine kostengünstigere Vorrichtung bereitgestellt werden, die dennoch eine Sterilisationsvorrichtung aufweist, bei welcher das Risiko einer Wiederverkeimung deutlich reduziert wird und auch höheren Sterilisationsanforderungen genügt, wodurch sich die vorgeschlagene Vorrichtung von den oben genannten Systemen unterscheidet.

Diese Aufgabe wird erfindungsgemäß durch den Gegenstand der unabhängigen Ansprüche 1 und 8 gelöst. Vorteilhafte Ausführungsformen und Weiterbildungen der Erfindungen sind Gegenstand der Unteransprüche.

Eine erfindungsgemäße Vorrichtung zum Umformen von Kunststoffvorformlingen zu Kunststoffbehältnissen weist dabei eine Transporteinrichtung zum Transportieren der Kunststoffvorformlinge auf. Diese Transporteinrichtung weist dabei einen beweglichen Träger auf, an welchem eine Vielzahl von Umformungsstationen angeordnet ist. Diese Umformungsstationen bilden jeweils einen Hohlraum aus und weisen Umformungsformen auf, wobei die Umformungsstationen dazu geeignet und bestimmt sind die Kunststoffvorformlinge aufzunehmen. Dabei sind die Kunststoffvorformlinge innerhalb des Hohlraums der Umformungsstationen zu den Kunststoffbehältnissen umformbar, indem die Kunststoffvorformlinge mit einem fließfähigen Medium beaufschlagt und expandiert werden. Weiterhin weisen die Umformungsstationen eine Beaufschlagungseinrichtung auf, welche die Kunststoffvorformlinge mit dem fließfähigen Medium beaufschlagen, sowie wenigstens eine Verbindungsleitung, welche dazu bestimmt ist, das fließfähige Medium zu der Beaufschlagungseinrichtung zu führen. Erfindungsgemäß weißt die Vorrichtung eine Sterilisationsvorrichtung auf, wodurch wenigstens ein Abschnitt dieser Verbindungsleitung wenigstens zweitweise mit einem Sterilisationsmedium beaufschlagbar ist.

Bevorzugt ist die Sterilisationsvorrichtung dabei beispielsweise zentral/ zentrisch an dem Träger angeordnet und versorgt so die wenigstens Abschnitte der Verbindungsleitungen zeitweise mit einem Sterilisationsmedium. Es wäre jedoch auch denkbar, dass beispielsweise jeder Umformungsstation eine Sterilisationsvorrichtung zugeordnet ist.

In einer bevorzugten Ausführungsform werden die Kunststoffvorformlinge mit einem fließfähigen Medium wie beispielsweise Blasluft beaufschlagt. Diese Blasluft steht dabei vorteilhaft unter einem gewissen, vordefinierten Druck. Diese unter Druck stehende Blasluft kann somit vorteilhaft in einen Kunststoffvorformling mittels der Beaufschlagungseinrichtung zugeführt und insbesondere in dessen Innenraum eingeleitet werden. Durch diese Beaufschlagung wird ein Kunststoffvorformling zu einem Kunststoffbehältnis expandiert. Unter Expandieren wird dabei vorteilhaft eine Ausdehnung in radialer und axialer Richtung des Kunststoffvorformlings verstanden. Es ist dabei durchaus denkbar und vorstellbar, dass die Kunststoffvorformlinge anstelle von Blasluft mit einer Flüssigkeit, etwa einer abzufüllenden Flüssigkeit beaufschlagt werden und somit expandiert werden.

Zusätzlich zu der Beaufschlagungseinrichtung weist die Vorrichtung vorteilhaft noch mindestens eine Reckstange auf. Diese Reckstange ist dabei bevorzugt einer Umformungsstation zugeordnet. Bevorzugt ist jeder Umformungsstation eine Reckstange zugeordnet. Diese Reckstange ist dabei bevorzugt in einer Längsrichtung der Kunststoffvorformlinge verfahrbar. Vorteilhaft kann diese Reckstange über eine Öffnung der Kunststoffvorformlinge, beispielsweise über dessen Mündungsbereich, in diese eingeführt/ eingefahren werden, wodurch die Kunststoffvorformlinge zusätzlich zur Beaufschlagung mit unter Druck stehender Blasluft auch noch in Längsrichtung gedehnt werden können.

In einer bevorzugten Ausführungsform ist die Beaufschlagungseinrichtung als eine Blasdüse ausgebildet. Diese Blasdüse kann dabei bevorzugt an eine Mündung beziehungsweise einen Mündungsbereich eines Kunststoffvorformlings angelegt werden. Dabei ist es vorteilhaft möglich, dass die Beaufschlagungseinrichtung beziehungsweise die Blasdüse derart an eine Mündung eines Kunststoffvorformlings angelegt wird, dass hierbei eine luftdichte Verbindung entsteht. Darunter ist zu verstehen, dass die Blasluft welche mit Druck in den Kunststoffvorformling eingeleitet wird ausschließlich in den Kunststoffvorformling gelangt und nicht an einem Übergangsbereich von Beaufschlagungseinrichtung und Kunststoffvorformlinge entweichen kann.

Bevorzugt handelt es sich bei dem oben erwähnten Träger um ein Blasrad. Dieser bewegliche Träger beziehungsweise dieses Blasrad ist dabei bevorzugt um eine vorgegebene Drehachse drehbar. Vorteilhaft sind an dem Träger beziehungsweise an dem Blasrad die Umformungsstationen angeordnet. Dabei weisen diese Umformungsstationen beispielsweise eine Blasform auf, die den oben genannten Hohlraum für die Kunststoffvorformlinge beziehungsweise die Kunststoffbehältnisse bereitstellen beziehungsweise aufweisen. Bevorzugt setzt sich diese Blasform dabei aus zwei oder mehr Teilen bevorzugt drei Teilen zusammen, beispielsweise zwei Seitenteilen und ein Bodenteil, wobei, wenn diese bevorzugt drei Teile zusammengeführt werden in deren Inneren der besagte Hohlraum entsteht beziehungsweise gebildet wird. Diese Umformungsstationen können vorteilhaft eine Öffnungs- und Schließbewegung ausführen um somit einen Kunststoffvorformling aufzunehmen beziehungsweise ein Kunststoffbehältnis aus der Umformungsstation freizugeben. Somit führen die Träger beziehungsweise die Umformungsstationen eine Schwenkbewegung aus, wobei diese aufgeschwenkt beziehungsweise zugeschwenkt werden. Bevorzugt ist dabei eine Schwenkachse dieser Schwenkbewegung parallel zu einer Längsrichtung der zu expandierenden Kunststoffvorformlinge.

Bevorzugt ist dem Träger, also dem Blasrad oder im Allgemeinen der Umformungsstation eine Erwärmungseinrichtung vorgeschaltet beziehungsweise befindet sich die Erwärmungseinrichtung aus Sicht der Umformungsstation stromaufwärts von dieser. Das bedeutet, dass bevorzugt die Kunststoffvorformlinge, welche dem beweglichen Träger zugeführt werden zunächst durch eine Erwärmungseinrichtung transportiert werden und somit bevorzugt mit einer Temperatur beaufschlagt werden, wodurch sich die Kunststoffvorformlinge erwärmen.

In einer vorteilhaften Ausführungsform ist der Umformungseinrichtung beispielsweise eine Fülleinrichtung und/oder eine Etikettiereinrichtung nachgeschaltet beziehungsweise befindet sich aus Sicht der Umformungsstation stromabwärts von dieser beziehungsweise diesen. Durch diese Fülleinrichtung können die fertig umgeformten Kunststoffbehältnisse mit einer Flüssigkeit, beispielsweise einem Getränk befüllt werden. Zuvor oder danach, das heißt bevor die Kunststoffbehältnisse mit einer Flüssigkeit befüllt wurden oder nachdem die Kunststoffbehältnisse mit einer Flüssigkeit befüllt wurden, können diese Kunststoffbehältnisse noch mit einem Etikett versehen werden. Dabei gibt es diverse Ausgestaltungen, wie und in welcher Art und Weise ein Etikett an einem Kunststoffbehältnis angebracht wird, diese sind einem Fachmann hinlänglich bekannt.

Um einen gewissen Reinheitsgrad gewährleisten zu können beziehungsweise den Hygienevorschriften gerecht zu werden weist die Vorrichtung eine Sterilisationseinrichtung auf, durch welche die Vorrichtung mit einem Sterilisationsmedium beaufschlagt werden kann. Vorteilhaft handelt es sich bei dem Sterilisationsmedium ebenfalls um ein fließfähiges Medium. Dabei ist das Sterilisationsmedium beispielsweise dadurch charakterisiert, dass es ein Objekt, welches mit dem fließfähigen Medium beaufschlagt wird, sterilisieren kann. Somit unterscheidet sich das fließfähige Medium mit welchem die Kunststoffvorformlinge beaufschlagt werden um zu Kunststoffbehältnissen umgeformt zu werden von dem fließfähigen Medium, welches zur Sterilisation dieser dient. Bevorzugt handelt es sich somit bei dem fließfähigen Medium um ein Sterilisationsmedium. In einer bevorzugten Ausführungsform handelt es sich bei dem Sterilisationsmedium um ein Gas, insbesondere ein Sterilgas bzw. Sterilisationsgas. Andere Sterilisationsmedien wie beispielsweise Flüssigkeiten sind nicht auszuschließen.

In einer bevorzugten Ausführungsform weist die Umformungsstation eine Verschließeinrichtung zum Verschließen der Beaufschlagungseinrichtung auf. Bevorzugt weist die Verschließeinrichtung ein bewegbares und insbesondere einschwenkbares Verschlusselement auf. Durch dieses bewegbare und insbesondere einschwenkbare Verschlusselement kann die Beaufschlagungseinrichtung während eines Sterilisationsvorgangs geschlossen werden. Dabei ist es beispielsweise möglich, dass das Verschlusselement eine Beaufschlagungseinrichtung beziehungsweise die Blasdüse derart abdichtet, dass ein Sterilisationsmedium nicht aus dieser austreten kann und beispielsweise nicht in die Kunststoffvorformlinge beziehungsweise Kunststoffbehältnisse oder aber in andere Bereiche der Vorrichtung gelangt. Dieses Verschlusselement kann dabei beispielsweise als Verschlusskappe ausgebildet sein. Andere Verschlusselemente sind jedoch nicht auszuschließen.

Bei einer weiteren bevorzugten Ausführungsform sind wenigstens einige Bereiche der Vorrichtung aus Materialien hergestellt, welche resistent gegenüber Sterilisationsmedien sind. So können derartige Bereiche beispielsweise aus Edelstahl, Niro oder Aluminium hergestellt sein. Daneben können für diese Bereiche auch Kunststoffe wie PTFE oder EPDM verwendet werden, die ebenso gegenüber Sterilisationsmedien resistent sind.

In einer bevorzugten Ausführungsform weist die Vorrichtung wenigstens ein Ventil auf, mit welchem beispielsweise ein Strömungsweg der Blasluft und/oder des Sterilisationsmediums gesteuert wird. Dabei kann es sich bevorzugt bei einem Strömungsweg der Blasluft und bei einem Strömungsweg des Sterilisationsmediums um den gleichen Strömungsweg handeln. Darunter ist zu verstehen, dass die Blasluft und auch das Sterilisationsmedium innerhalb der gleichen Leitungen geführt beziehungsweise gefördert/ geleitet werden. Bevorzugt sind auch diese Ventile, welche die Strömungswege steuern mit einem Sterilisationsmedium beaufschlagbar und somit ebenfalls sterilisierbar. Es könnten jedoch auch teilweise unterschiedliche Strömungswege vorgesehen sein.

Bevorzugt weist die Vorrichtung einen Ventilblock mit wenigstens einem bevorzugt mehreren Ventilen auf. An diesem Ventilblock ist beispielsweise die Beaufschlagungseinrichtung angeordnet. Auch eine Reckstange kann dabei beispielsweise innerhalb dieses Ventilblocks verfahren werden. Vorteilhaft ist es möglich, dass entweder lediglich einzelne Ventile sterilisierbar sind oder aber auch alle Ventile.

In einer bevorzugten Ausführungsform weist die Sterilisationsvorrichtung wenigstens eine erste Zuführleitung zum Zuführen des Sterilisationsmediums an die einzelnen Bereiche der Vorrichtung beziehungsweise der Umformungsstationen auf. Vorteilhaft weist die Sterilisationsvorrichtung wenigstens eine erste Abführleitung zum Abführen des Sterilisationsmediums aus den einzelnen Bereichen der Vorrichtung beziehungsweise der Umformungsstationen auf. Somit wird das Sterilisationsmedium über eine Leitung zugeführt und über eine andere Leitung abgeführt.

In einer weiteren bevorzugten Ausführungsform weist die Sterilisationsvorrichtung (wenigstens und bevorzugt genau) zwei Zuführleitungen zum Zuführen des Sterilisationsmediums und zwei Abführleitungen zum Abführen des Sterilisationsmediums auf. Somit sind bevorzugt jeder Umformungsstation zwei Zuführleitungen und zwei Abführleitungen zugeordnet beziehungsweise an dieser angeordnet.

Bevorzugt handelt es sich bei den Zuleitungen für das Sterilisationsmedium um die gleichen Leitungen zum Zuführen der unter Druck stehenden Blasluft. Somit sind die Zuleitungen für die Blasluft gleichzeitig die Zuleitungen für das Sterilisationsmedium. Ebenso sind die Abführleitungen für die Blasluft gleichzeitig die Abführleitungen für das Sterilisationsmedium. Bevorzugt sind die oben erwähnten Ventile beispielsweise innerhalb dieser Zuführ- und Abführleitungen angeordnet. Durch diese Ventile innerhalb der Zuführ- und Abführleitungen ist es beispielsweise möglich, dass innerhalb der Zuführleitungen das Sterilisationsmedium beziehungsweise die Blasluft mit unterschiedlichen Druckniveaus geführt beziehungsweise gefördert werden.

Bevorzugt bestehen diese Leitungen aus Materialien, welche aus einer Gruppe von Materialien ausgewählt sind, welche Edelstahl, Aluminium, PTFE und EPDM enthält.

In einer bevorzugten Ausführungsform weist die Vorrichtung wenigstens einen Sterilfilter auf. Bevorzugt weist die Vorrichtung mehrere dieser Sterilfilter auf. Bevorzugt sind diese Sterilfilter innerhalb der Leitungen, welche die Blasluft beziehungsweise das Sterilisationsmedium leiten angeordnet. Insbesondere sind diese Sterilfilter innerhalb der Zuführleitungen der Blasluft beziehungsweise des Sterilisationsmediums angeordnet.

Bevorzugt ist wenigstens ein Sterilfilter pro Druckstufe vorgesehen. Alternativ ist wenigstens ein Sterilfilter pro Umformungsstation zugeordnet, besonders bevorzugt sind zwei Sterilfilter pro Umformungsstation zugeordnet.

Bevorzugt ist wenigstens ein Sterilfilter vor einem Ringkanal angeordnet und insbesondere einem Ringkanal der einer bestimmten Druckstufe zugeordnet ist.

In einer weiteren bevorzugten Ausführungsform werden lediglich die Leitungen, welche die unter Druck stehende Blasluft fördern, die Beaufschlagungseinrichtung, welche die unter Druck stehende Blasluft in die Kunststoffvorformlinge einleitet und die Reckstange, welche die Kunststoffvorformlinge in Längsrichtung dehnt mit dem Sterilisationsmedium beaufschlagt. Somit wird beispielsweise der Hohlraum, welcher von der Umformungsstation gebildet wird und innerhalb welchen ein Kunststoffvorformling zu einem Kunststoffbehältnis expandiert wird, nicht mit einem Sterilisationsmedium beaufschlagt.

Bevorzugt sind die Leitungen, die Beaufschlagungseinrichtung, die Reckstange und die Sterilfilter derart ausgestaltet, dass sie bei deren Sterilisation mit einem H₂O₂ Gas und/oder Peressigsäuregas beaufschlagbar sind. Vorteilhaft sind somit die Bauteile der Vorrichtung, welche mit dem Sterilisationsmedium in Kontakt kommen aus einem Material gefertigt, welches gegenüber dem Sterilisationsmedium widerstandsfähig sind. Andere Bauteile welche nicht mit dem Sterilisationsmittel in Kontakt kommen können dabei aus einem anderen Material hergestellt sein. Dabei können die Bauteile welche mit dem Sterilisationsmedium in Kontakt kommen vollständig aus einem derartigen widerstandfähigen Material bestehen, jedoch wäre es durchaus auch denkbar, dass lediglich deren Oberfläche aus einem derartigen widerstandfähigen Material bestehen.

Weiter bevorzugt kann auch nur die Oberfläche mit einem derartigen widerstandsfähigen Material bestehen, welche tatsächlich mit dem Sterilisationsmedium in Kontakt kommt. So reicht es beispielsweise aus, dass bei den Leitungen, welche die Blasluft und das Sterilisationsmedium führen/ leiten lediglich die innere Oberfläche beschichtet ist. Unter einem widerstandsfähigen Material werden dabei im Allgemeinten solche Materialien verstanden, welche nicht anfällig für eine Oxidation sind, wie beispielsweise Edelstahl.

Bevorzugt sind in jedem Blasluftstrang beziehungsweise in jeder Zuführleitung Sterilfilter eingesetzt. Zum Sterilisieren der Sterilfilter, der Blasluftwege, der Beaufschlagungseinrichtung und der Reckstange wird das Sterilisationsmedium beispielsweise über zwei Zuführleitungen zur Beaufschlagungseinrichtung, also der Blasdüse geführt. Dabei ist die Blasdüse, wie weiter oben bereits beschrieben mit einem vorteilhaft einschwenkbaren Verschlusselement verschlossen. Dadurch kann das Sterilisationsmedium nicht mehr aus der Blasdüse austreten. Somit wird ein Bereich, welcher sich aus Zuführleitungen, Sterilfilter, Ventile innerhalb der Zuführleitungen, Reckstange und Beaufschlagungseinrichtung sterilisiert.

Die Reckstange kann dabei am oberen Ende (das Gegenstück zum unteren Ende, wobei das untere Ende dieses ist, welches in den Kunststoffvorformling eingefahren werden kann) derart abgedichtet sein, dass die gesamte Reckstange in den Ventilblock eingefahren werden kann. Somit kann zusätzlich neben der Blasdüse, der Sterilfilter und der Blasluftwege auch die Reckstange, zumindest der Teil, der in den Kunststoffvorformling einführbar ist, sterilisiert werden. Weiter kann durch dieses Verschlusselement eine Art Kurzschluss zwischen den einzelnen Blasluftsträngen ermöglicht werden, sodass das einströmende Sterilisationsmedium über die beispielsweise zwei verbleibenden Leitungen wieder abgeleitet beziehungsweise abgeführt werden kann.

In einer weiteren Ausführungsform wäre es denkbar, auf das oben erwähnte Verschlusselement zu verzichten. Somit würde das Sterilisationsmedium in die Blasform, also in den durch die Umformungsstation gebildeten Hohlraum einströmen beziehungsweise eingeleitet werden. Das dann an der Blasstation beziehungsweise der Umformungsstation austretende Sterilisationsmedium könnte dann mittels einer beispielsweise ringförmigen Absaugeinrichtung abgesaugt werden.

In einer weiteren Ausführungsform wäre es denkbar, dass eine schaltbare Verbindung zwischen der Umformungsstation und der Reckstange hergestellt werden kann. Dadurch könnte das Sterilisationsmedium aus der Umformungsstation zur Reckstange strömen um somit diese einer Sterilisation zu unterziehen. Bei dieser schaltbaren Verbindung könnte es sich beispielsweise um eine der oben erwähnten Abführleitungen handeln. Hierzu wäre es jedoch vorteilhaft, wenn die Reckstange eingehaust wäre und an einem oberen Ende mit beispielsweise einer Absaugung verbunden wäre, sodass das Sterilisationsmedium sicher abgeführt werden kann. Dabei wäre es denkbar, dass die Absaugung stationär an dem beweglichen Träger angeordnet wäre und während eines Sterilisationsvorgangs mittels einer beweglichen Andockeinrichtung mit der stehenden Absaugung verbunden wird.

In einer weiteren bevorzugten Ausführungsform ist die Vorrichtung innerhalb eines Reinraums angeordnet. Dabei kann dieser Reinraum etwa die Reinraumklasse DIN EN 14644 oder eine vergleichbare Reinraumklasse aufweisen.

Aufgrund der erfindungsgemäßen Vorrichtung kann hierbei ein Reinraum Anwendung finden, welcher eine relativ geringe Reinheitsklasse aufweist. Dies hat weiterhin den Vorteil, dass die Vorrichtung kostengünstig bleibt, da Reinräume mit hohen Reinheitsklassen sehr kostenintensiv sind.

Die vorliegende Erfindung ist weiter auf ein Verfahren zum Umformen von Kunststoffvorformlingen zu Kunststoffbehältnissen gerichtet, wobei die Kunststoffvorformlinge mittels einer Transporteinrichtung transportiert werden. Diese Transporteinrichtung weist einen beweglichen und insbesondere drehbaren Träger auf, welcher eine Vielzahl von Umformungsstationen, welche einen Hohlraum aufweisen, aufweist. Die Kunststoffvorformlinge werden innerhalb des Hohlraums der Umformungsstationen zu den Kunststoffbehältnissen umgeformt, indem die Kunststoffvorformlinge mit einem fließfähigen Medium beaufschlagt und expandiert werden. Die Umformungsstationen weisen weiterhin (jeweils wenigstens) eine Beaufschlagungseinrichtung auf, wodurch die Kunststoffvorformlinge mit dem fließfähigen Medium beaufschlagt werden. Dabei wird das fließfähige Medium mit wenigstens einer Verbindungsleitung zu der Beaufschlagungseinrichtung geführt.

Erfindungsgemäß wird wenigstens ein Abschnitt dieser Verbindungsleitungen wenigstens zweitweise mit einem Sterilisationsmedium einer Sterilisationsvorrichtung beaufschlagt.

Bei einem weiteren vorteilhaften Verfahren wird wenigstens zeitweise ein Strömungsweg während der Sterilisation geschlossen. Dabei kann beispielsweise eine Beaufschlagungseinrichtung mittels eines Verschlusselements verschlossen werden, sodass der Strömungsweg während der Sterilisation geschlossen ist. Dieses Verschlusselement kann dabei wie oben bereits ausgeführt einschwenkt werden und beispielsweise als Verschlusskappe ausgebildet sein. Somit ist es möglich, dass beispielsweise eine Reckstange zunächst in die Beaufschlagungseinrichtung eingefahren wird anschließend ein Verschlusselement die Beaufschlagungseinrichtung verschließt und dann beispielsweise ein Sterilisationsprozess durchgeführt wird, wodurch die Zuführleitungen, die Reckstange, und die Beaufschlagungseinrichtung sterilisiert werden.

Ist eine derartige Sterilisation beendet kann das zugeführte Sterilisationsmedium über die oben beschriebenen Abführkanäle aus der Maschine abgeführt werden. Besonders bevorzugt erfolgt eine Zu- und Anführung kontinuierlich.

Dabei können die erwähnten Abführleitungen beispielsweise mit einer Absaugung gekoppelt sein, die das zuvor zugeführte Sterilisationsmedium beispielsweise emissionsfrei abführt und somit aus der Maschine ausleitet.

Die vorliegende Erfindung bietet diverse Vorteile gegenüber dem internen Stand der Technik der Anmelderin. Durch diese vorliegende Erfindung wird eine sterilisierbare Blasmaschine bereitgestellt, bei der zumindest der Teil der Maschine durch den Medien strömen welche in Berührung mit dem sterilisierten Packstoff (insbesondere den sterilisierten Behältnissen und/oder Kunststoffvorformlingen) kommen. Somit können die intern bekannten Systeme verbessert werden, da eine höhere Sterilisation beziehungsweise ein Risiko einer Wiederverkeimung reduziert beziehungsweise nahezu ausgeschlossen werden kann.

Weitere Vorteile und Ausführungsformen ergeben sich aus den beigefügten Zeichnungen.

Darin zeigen:
- Fig. 1: eine grob schematische Darstellung einer erfindungsgemäßen Vorrichtung
- Fig. 2: eine detailliertere Darstellung eines Ventilblocks
- Fig. 3: eine grob schematische Darstellung einer Umformungsstation

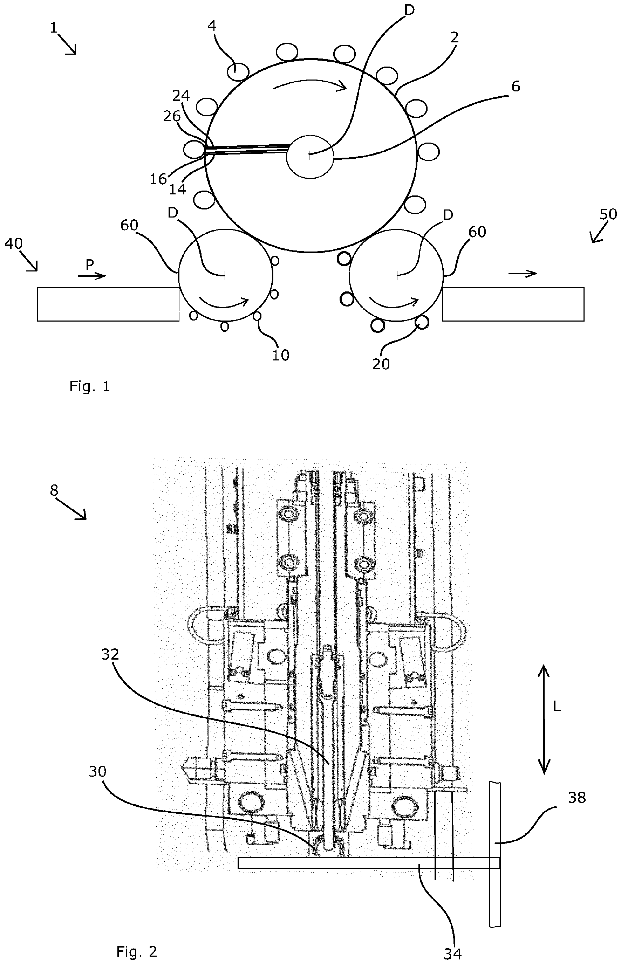

In der Figur 1 wird eine erfindungsgemäße Vorrichtung 1 dargestellt. Dabei ist zu sehen, dass an einem Träger 2 eine Vielzahl von Umformungsstationen 4 angeordnet ist. Das Bezugszeichen D symbolisiert dabei die Drehachse um welche der Träger beweglich beziehungsweise drehbar ist. Auch die Transporteinrichtung 60 ist zu erkennen, durch welche die Kunststoffvorformlinge 10 dem Träger 2 beziehungsweise den Umformungsstationen 4 zugeführt werden beziehungsweise durch welche die fertig umgeformten Kunststoffbehältnisse 20 von dem Träger 2 beziehungsweise den Umformungsstationen 4 entgegengenommen werden. Diese Transporteinrichtungen 60 sind dabei auch jeweils um die angegeben Drehachse D drehbar.

Die Pfeile stellen dabei die Transportrichtung P an, wodurch auch der Transportpfad der Kunststoffvorformlinge 10 beziehungsweise der Kunststoffbehältnisse 20 erkennbar wird. Ebenso ist der Figur 1 zu entnehmen, dass dem Träger 2 eine Erwärmungseinrichtung 40 vorgeschaltet ist beziehungsweise sich diese Erwärmungseinrichtung 40 stromaufwärts bezüglich des Trägers 2 befindet. Eine Etikettier- und/ oder Fülleinrichtung ist in dieser Darstellung dem Träger 2 nachgeschaltet beziehungsweise befindet sich diese Etikettier- und/ oder Fülleinrichtung stromabwärts bezüglich des Trägers 2.

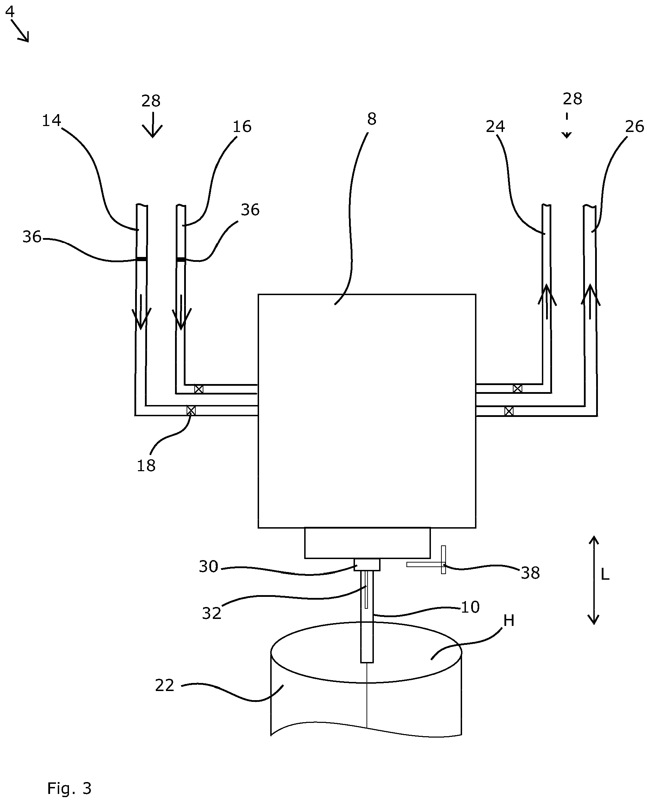

In dieser gezeigten Ausführungsform ist eine Sterilisationsvorrichtung 6 zentrisch an dem Träger 2 angeordnet und kann sich dabei beispielsweise mit diesem um die Drehachse D drehen. Wie oben bereits erwähnt, ist es auch möglich, dass jeder Umformungsstation 4 eine Sterilisationsvorrichtung 6 zugeordnet ist. Weiter sind die Zuführleitungen 14, 16 und die Abführleitungen 24, 26 zu erkennen, die in ihrer Gesamtheit als Verbindungsleitungen 28 (Fig. 3) bezeichnet werden.

Aus Gründen der Übersichtlichkeit wurden in dieser Darstellung lediglich ein Paar dieser Zuführ- und Abführleitungen 14, 16, 24 und 26 dargestellt. Normalerweise werden sämtliche Umformungsstationen 4 mit der Sterilisationsvorrichtung 6 auf diese Weise verbunden. Auch werden die Umformungsstationen 4 wie oben beschrieben über die Zuführleitungen 14 und 16 mit der Blasluft oder dem Sterilisationsmedium versorgt, durch welche die Kunststoffvorformlinge 10 zu den Kunststoffbehältnissen 20 umgeformt werden. Mittels der Abführleitungen 24 und 26 wird die verbrauchte Blasluft oder das Sterilisationsmedium wieder aus der Umformungsstation 4 abgeführt.

Figur 2 zeigt eine detailliertere Darstellung eines Ventilblocks 8. Dieser Ventilblock 8 weist dabei die Beaufschlagungseinrichtung 30 auf, welche hierbei als Blasdüse ausgebildet ist. Oberhalb dieser Beaufschlagungseinrichtung 30 ist die Reckstange 32 angeordnet. Diese Reckstange 32 ist dabei in Längsrichtung L verfahrbar. Das heißt diese Reckstange 32 kann beispielsweise durch diese Blasdüse 30 hindurchgeführt beziehungsweise hindurchgefahren werden und umgekehrt, um so einen nicht gezeigten Kunststoffvorformling 10 in dessen Längsrichtung zu dehnen. Ebenfalls die ist die Verschließeinrichtung 38 mit dem beweglichen beziehungsweise einschwenkbaren Verschlusselement 34 zu sehen. Hierbei ist das Verschlusselement 34 in einer derartigen Position dargestellt, in welcher die Beaufschlagungseinrichtung 30 vollständig abgeschlossen ist, sodass kein fließfähiges Medium aus dieser Beaufschlagungseinrichtung 30 austreten kann, selbst wenn dieses mit einem vorgegebenen Druck an dieser Beaufschlagungseinrichtung 30 anliegt.

Figur 3 zeigt eine grob schematische Darstellung einer Umformungsstation 4. Hierbei ist der Ventilbock 8 zu sehen, welcher über die Zuführleitungen 14 und 16 mit einem Sterilisationsmedium oder einer Blasluft versorgt werden kann. Der Ventilblock 8 weist darüber hinaus auch zwei Abführleitungen 24 und 26 auf. Mit diesen Abführleitung 24 und 26 kann das verbrauchte Sterilisationsmedium oder die verbrauchte Blasluft aus dem Ventilblock 8 abgeführt werden. Diese Zuführleitungen 14 und 16 und Abführleitungen 24 und 26 werden dabei allgemein als Verbindungsleitungen 28 bezeichnet.

Es wären auch andere Verwendungen der jeweiligen Leitungen denkbar. So wäre es denkbar, dass die Leitungen 14, 16 und 24 der Zuführung dienen und die Leitung 28 der Abführung. Auch wäre es denkbar, dass nur die Leitung 14 der Zuführung dient und die Leitungen 16, 24 und 28 der Abführung.

Innerhalb der Zuführleitungen 14 und 16 sind Sterilfilter 36 angeordnet durch welche das Sterilisationsmedium beziehungsweise die Blasluft hindurchgeführt werden kann. Des Weiteren sind in den Zuführleitungen 14 und 16 und auch in den Abführleitungen 24 und 26 jeweils Ventile 18 angeordnet. Der besseren Übersicht wegen wurde hier jedoch nur ein Ventil mit dem Bezugszeichen 18 versehen. Die Pfeile innerhalb der Zuführleitungen 14 und 16 und den Abführleitungen 24 und 26 geben jeweils die Strömungsrichtung des Sterilisationsmediums beziehungsweise der Blasluft innerhalb der Verbindungsleitungen 28 an.

Die Vorrichtung kann auch bevorzugt wenigstens einen (nicht gezeigten) Ringkanal aufweisen, der zum Zur Verfügung - Stellen einer bestimmten Druckstufe dient, Bevorzugt kann die Vorrichtung mehrere Ringkanäle aufweisen, welche unterschiedliche Druckstufen zur Verfügung stellen.

Bei einer bevorzugten Ausführungsform sind die jeweiligen Sterilfilter vor den jeweiligen Ringkanälen vorgesehen (anders als in Fig. 3 dargestellt). Besonders bevorzugt ist wie oben erwähnt, für jede Druckstufe ein eigener Sterilfilter vorgesehen.

Auch ist in der Figur 3 die Beaufschlagungseinrichtung 30 zu sehen, an welcher bereits ein Kunststoffvorformling 10 angebracht ist. Innerhalb des Kunststoffvorformlings 10 ist eine Reckstange 32 zu sehen, welche in Längsrichtung L verfahren werden kann und somit den Kunststoffvorformling 10 in dessen Längsrichtung dehnt. Um den hier gezeigten Vorgang darstellen zu können, wurde die Blasform 22 nach unten abgesetzt. Normalerweise befindet sich der Kunststoffvorformling 10 wie oben bereits erwähnt innerhalb des Hohlraums H, in welchem die Kunststoffvorformlinge 10 zu Kunststoffbehältnissen 20 umgeformt werden. Der Strich an der Blasform 22 soll verdeutlichen, dass sich die Blasform 22 beispielweise aus zwei Teilen zusammensetzt, wodurch es, wie weiter oben beschrieben ist, möglich ist, dass eine Öffnungs- und Schließbewegung stattfinden kann, wodurch ein Kunststoffvorformling 10 aufgenommen und ein Kunststoffbehältnis 20 abgegeben werden kann. Die Blasform kann darüber hinaus auch noch ein Bodenteil aufweisen, wodurch sich die Blasform 22 beispielsweise aus drei Teilen zusammensetzt. Ein entsprechendes Bodenteil ist jedoch in dieser Figur nicht dargestellt. Da hier ein Blasvorgang dargestellt ist befindet sich Verschließeinrichtung 38 in einer zurückgezogenen Position, wodurch die Beaufschlagungseinrichtung 30 den Kunststoffvorformling 10 mit Blasluft beaufschlagen kann.

### Bezugszeichenliste

- 1: Vorrichtung
- 2: Träger
- 4: Umformungsstation
- 6: Sterilisationsvorrichtung
- 8: Ventilblock
- 10: Kunststoffvorformlinge
- 14: Zuführleitung
- 16: Zuführleitung
- 18: Ventil
- 20: Kunststoffbehältnisse
- 22: Blasform
- 24: Abführleitung
- 26: Abführleitung
- 28: Verbindungsleitungen
- 30: Beaufschlagungseinrichtung
- 32: Reckstange
- 34: Verschlusselement
- 36: Sterilfilter
- 38: Verschließeinrichtung
- 40: Erwärmungseinrichtung
- 50: Etikettiereinrichtung/ Fülleinrichtung
- 60: Transporteinrichtung
- D: Drehachse
- H: Hohlraum
- L: Längsrichtung
- P: Transportrichtung

## Patentansprüche

1. Vorrichtung (1) zum Umformen von Kunststoffvorformlingen (10) zu Kunststoffbehältnissen (20) wobei die Vorrichtung (1) eine Transporteinrichtung zum Transportieren der Kunststoffvorformlinge (10) aufweist, wobei die Transporteinrichtung einen beweglichen Träger (2) aufweist, an welchem eine Vielzahl von Umformungsstationen (4) angeordnet ist, wobei die Umformungsstationen (4) jeweils einen Hohlraum (H) ausbilden und Umformungsformen aufweisen, welche dazu geeignet und bestimmt sind die Kunststoffvorformlinge (10) aufzunehmen, wobei die Kunststoffvorformlinge (10) innerhalb dieses Hohlraums (H) der Umformungsstation (4) zu den Kunststoffbehältnissen (20) umformbar sind, indem die Kunststoffvorformlinge (10) mit einem fließfähigen Medium beaufschlagt und expandiert werden, wobei die Umformungsstationen (4) weiterhin eine Beaufschlagungseinrichtung (30) aufweisen, welche die Kunststoffvorformlinge (10) mit dem fließfähigen Medium beaufschlagen sowie wenigstens eine Verbindungsleitung (28), welche dazu bestimmt ist, das fließfähige Medium zu der Beaufschlagungseinrichtung (30) zu führen,
wobei
die Vorrichtung (1) eine Sterilisationsvorrichtung (6) aufweist, wodurch wenigstens ein Abschnitt dieser Verbindungsleitung (28) wenigstens zeitweise mit einem Sterilisationsmedium beaufschlagbar ist, **dadurch gekennzeichnet, dass**
die Umformungsstationen (4) eine Verschlie-βeinrichtung (38) aufweisen, welche ein bewegbares und einschwenkbares Verschlusselement (34) aufweist, wodurch die Beaufschlagungseinrichtung (30) während eines Sterilisationsvorgangs verschließbar ist, wobei das Verschlusselement (34) die Beaufschlagungseinrichtung (30) derart abdichtet, dass ein Sterilisationsmedium nicht aus dieser austreten kann und nicht in die Kunststoffvorformlinge (10) oder andere Bereiche der Vorrichtung (1) gelangt.

2. Vorrichtung (1) nach Anspruch 1,
**dadurch gekennzeichnet, dass**
die Sterilisationsvorrichtung (6) wenigstens eine erste Zuführleitung (14) zum Zuführen des Sterilisationsmediums an die einzelne Bereiche der Vorrichtung (1) beziehungsweise der Umformungsstationen (4) aufweist und/oder die Sterilisationsvorrichtung (6) wenigstens eine erste Abführleitung (24) zum Abführen des Sterilisationsmediums aus den einzelnen Bereichen der Vorrichtung (1) beziehungsweise der Umformungsstationen (4) aufweist.

3. Vorrichtung (1) nach Anspruch 1,
**dadurch gekennzeichnet, dass**
die Sterilisationsvorrichtung (6) wenigstens eine und bevorzugt wenigstens zwei Zuführleitungen (14, 16) zum Zuführen des Sterilisationsmediums und wenigstens eine und bevorzugt wenigstens zwei Abführleitungen (24, 26) zum Abführen des Sterilisationsmediums aufweist.

4. Vorrichtung (1) nach wenigstens einem der vorangegangenen Ansprüche,
**dadurch gekennzeichnet, dass**
lediglich die Verbindungsleitungen (28), welche das fließfähige Medium fördern, die Beaufschlagungseinrichtung (30), welche die Kunststoffvorformlinge (10) mit dem fließfähigen Medium beaufschlagt und eine Reckstange (32), welche die Kunststoffvorformlinge (10) in Längsrichtung (L) dehnt mit dem Sterilisationsmedium beaufschlagbar sind.

5. Vorrichtung (1) nach wenigstens einem der vorangegangenen Ansprüche,
**dadurch gekennzeichnet, dass**
die Vorrichtung (1) wenigstens einen Sterilfilter (36) aufweist.

6. Vorrichtung (1) nach wenigstens einem der vorangegangenen Ansprüche,
**dadurch gekennzeichnet, dass**
die Verbindungsleitungen (28), die Beaufschlagungseinrichtung (30), die Reckstange (32) und die Sterilfilter (36) derart ausgestaltet sind, dass sie bei deren Sterilisation mit einem H₂O₂ Gas und/oder Peressigsäuregas beaufschlagbar sind.

7. Vorrichtung (1) nach wenigstens einem der vorangegangenen Ansprüche,
**dadurch gekennzeichnet, dass**
die Vorrichtung (1) innerhalb eines Reinraums (36) angeordnet ist.

8. Verfahren zum Umformen von Kunststoffvorformlingen (10) zu Kunststoffbehältnissen (20), wobei die Kunststoffvorformlinge (10) mittels einer Transporteinrichtung transportiert werden, wobei die Transporteinrichtung einen beweglichen Träger (2) aufweist, welcher eine Vielzahl von Umformungsstationen (4), welche einen Hohlraum (H) aufweisen, aufweist, wobei die Kunststoffvorformlinge (10) innerhalb des Hohlraums (H) der Umformungsstationen (4) zu Kunststoffbehältnissen (20) umgeformt werden, indem die Kunststoffvorformlinge (10) mit einem fließfähigen Medium beaufschlagt und expandiert werden, wobei die Umformungsstationen (4) weiterhin eine Beaufschlagungseinrichtung (30) aufweisen, wodurch die Kunststoffvorformlinge (10) mit dem fließfähigen Medium beaufschlagt werden, wobei das fließfähige Medium mit wenigstens einer Verbindungsleitung zu der Beaufschlagungseinrichtung (30) geführt wird,
wobei
wenigstens ein Abschnitt dieser Verbindungsleitungen wenigstens zeitweise mit einem Sterilisationsmedium einer Sterilisationsvorrichtung (6) beaufschlagt wird, **dadurch gekennzeichnet, dass**
die Umformungsstationen (4) eine Verschließeinrichtung (38) aufweisen, welche ein bewegbares und einschwenkbares Verschlusselement (34) aufweist, wodurch die Beaufschlagungseinrichtung (30) während eines Sterilisationsvorgangs verschließbar ist, wobei das Verschlusselement (34) die Beaufschlagungseinrichtung (30) derart abdichtet, dass ein Sterilisationsmedium nicht aus dieser austreten kann und nicht in die Kunststoffvorformlinge (10) oder andere Bereiche einer Vorrichtung (1) zum Umformen von Kunststoffvorformlingen zu Kunststoffbehältnissen gelangt.

## Claims

1. Apparatus (1) for forming plastic preforms (10) into plastic containers(20), wherein the apparatus (1) has a transport means for transporting the plastic preforms (10), wherein the transport means has a movable carrier (2) on which a plurality of forming stations (4) are arranged, wherein the forming stations (4) each form a cavity (H) and comprise forming moulds, which are suitable and intended to receive the plastic preforms (10), the plastic preforms (10) being formable into the plastic containers (20) within this cavity (H) of the forming station (4), in that the plastic preforms (10) are acted upon by a flowable medium and expanded, wherein the forming stations(4) further comprise an application means (30), which acts upon the plastic preforms (10) with the flowable medium, and at least one connecting line (28), which is intended to guide the flowable medium to the application means (30),
wherein the apparatus (1) has a sterilization device (6), whereby at least a section of this connecting line (28) can be at least temporarily pressurized with a sterilization medium,
**characterized in that**
the forming stations (4) have a closing means (38), which has a movable and pivotable closing element (34), whereby the application means (30) can be closed during a sterilization process, wherein the closing element (34) seals the application means (30) in such a way that a sterilization medium cannot escape from it and does not get into the plastic preforms (10) or into other areas of the apparatus (1).

2. Apparatus (1) according to claim 1,
**characterized in that**
the sterilization device (6) has at least one first supply line (14) for supplying the sterilization medium to the individual regions of the apparatus (1) or the forming stations (4) and/or the sterilization device (6) has at least one first discharge line (24) for discharging the sterilization medium from the individual regions of the apparatus (1) or the forming stations (4).

3. Apparatus (1) according to claim 1,
**characterized in that**
the sterilization device (6) comprises at least one and preferably at least two supply lines (14, 16) for supplying the sterilization medium and at least one and preferably at least two discharge lines (24, 26) for discharging the sterilization medium.

4. Apparatus (1) according to at least one of the preceding claims,
**characterized in that**
only the connecting lines (28) that convey the flowable medium, the application means (30) that acts upon the plastic preforms by a flowable medium and a stretching rod (32) that stretches the plastic preforms (10) in the longitudinal direction (L) can be loaded with the sterilization medium.

5. Apparatus (1) according to at least one of the preceding claims,
**characterized in that**
the apparatus (1) has at least one sterile filter (36).

6. Apparatus (1) according to at least one of the preceding claims,
**characterized in that**
the connecting lines (28), the application means (30), the stretching rod (32) and the sterile filters (36) are designed in such a way that they can be pressurized with an H₂O₂ gas and/or peracetic acid gas during their sterilization.

7. Apparatus (1) according to at least one of the preceding claims,
**characterized in that**
the apparatus (1) is arranged within a clean room (36).

8. Method for forming plastic preforms (10) into plastic containers (20), wherein the plastic preforms (10) are transported by means of a transport means, wherein the transport means has a movable carrier (2) which has a plurality of forming stations (4) which have a cavity (H), wherein the plastic preforms (10) are formed into plastic containers (20) within the cavity (H) of the forming stations (4), by subjecting the plastic preforms (10) to the action of a flowable medium and expanding them, wherein the forming stations (4) further comprise an application means (30), whereby the plastic preforms (10) are acted upon by the flowable medium, wherein the flowable medium is guided to the application means (30) by at least one connecting line,
wherein at least one section of these connecting lines is at least temporarily acted upon by a sterilization medium of an application means (6), **characterized in that**
the forming stations (4) have a closing means (38), which has a movable and pivotable closing element (34), whereby the application means (30) can be closed during a sterilization process, wherein the closing element (34) seals the application means (30) in such a way that a sterilization medium cannot escape from it and does not get into the plastic preforms (10) or into other areas of an apparatus (1) for forming plastic preform into plastic containers.

## Revendications

1. Dispositif (1) destiné à façonner des préformes en plastique (10) afin d'en faire des contenants en plastique (20), dans lequel le dispositif (1) présente un équipement de transport pour transporter les préformes en plastique (10), dans lequel l'équipement de transport présente un support (2) mobile contre lequel est agencée une pluralité de postes de façonnage (4), dans lequel les postes de façonnage (4) forment respectivement un espace libre (H) et présentent des moules de façonnage, lesquels sont adaptés et déterminés pour recevoir les préformes en plastique (10), dans lequel les préformes en plastique (10) peuvent être façonnées à l'intérieur de cet espace libre (H) du poste de façonnage (4) pour en faire des contenants en plastique (20), en ce que les préformes en plastique (10) sont sollicitées et dilatées avec un milieu apte à l'écoulement, dans lequel les postes de façonnage (4) présentent en outre un équipement de sollicitation (30), lequel sollicite les préformes en plastique (10) avec le milieu apte à l'écoulement, ainsi qu'au moins une conduite de liaison (28), laquelle est déterminée pour guider le milieu apte à l'écoulement vers l'équipement de sollicitation (30),
dans lequel le dispositif (1) présente un dispositif de stérilisation (6), par lequel au moins une section de cette conduite de liaison (28) peut être sollicitée au moins par intermittence avec un milieu de stérilisation,
**caractérisé en ce que**
les postes de façonnage (4) présentent un équipement de fermeture (38), lequel présente un élément de fermeture (34) pouvant être déplacé et rentré par pivotement, par lequel l'équipement de sollicitation (30) peut être fermé pendant un processus de stérilisation, dans lequel l'élément de fermeture (34) étanchéifie l'équipement de sollicitation (30) de telle sorte qu'un milieu de stérilisation ne puisse sortir de celui-ci ni parvenir dans les préformes en plastique (10) ou d'autres régions du dispositif (1).

2. Dispositif (1) selon la revendication 1,
**caractérisé en ce que**
le dispositif de stérilisation (6) présente au moins une première conduite d'amenée (14) pour amener le milieu de stérilisation aux différentes régions du dispositif (1) ou des postes de façonnage (4) et/ou le dispositif de stérilisation (6) présente au moins une première conduite d'évacuation (24) pour évacuer le milieu de stérilisation hors des différentes régions du dispositif (1) ou des postes de façonnage (4).

3. Dispositif (1) selon la revendication 1,
**caractérisé en ce que**
le dispositif de stérilisation (6) présente au moins une et de préférence au moins deux conduites d'amenée (14, 16) pour amener le milieu de stérilisation et au moins une et de préférence au moins deux conduites d'évacuation (24, 26) pour évacuer le milieu de stérilisation.

4. Dispositif (1) selon au moins l'une des revendications précédentes,
**caractérisé en ce que**
uniquement les conduites de liaison (28), lesquelles acheminent le milieu apte à l'écoulement, l'équipement de sollicitation (30), lequel sollicite les préformes en plastique (10) avec le milieu apte à l'écoulement, et une tige d'étirage (32), laquelle étire les préformes en plastique (10) dans la direction longitudinale, peuvent être sollicités avec le milieu de stérilisation.

5. Dispositif (1) selon au moins l'une des revendications précédentes,
**caractérisé en ce que**
le dispositif (1) présente au moins un filtre stérile (36).

6. Dispositif (1) selon au moins l'une des revendications précédentes,
**caractérisé en ce que**
les conduites de liaison (28), l'équipement de sollicitation (30), la tige d'étirage (32) et le filtre stérile (36) sont conçus de telle sorte qu'ils puissent être sollicités lors de leur stérilisation avec un gaz H₂O₂ et/ou un gaz d'acide peracétique.

7. Dispositif (1) selon au moins l'une des revendications précédentes,
**caractérisé en ce que**
le dispositif (1) est agencé à l'intérieur d'une salle blanche (36).

8. Procédé destiné à façonner des préformes en plastique (10) afin d'en faire des contenants en plastique (20), dans lequel les préformes en plastique (10) sont transportées au moyen d'un équipement de transport, dans lequel l'équipement de transport présente un support (2) mobile, lequel présente une pluralité de postes de façonnage (4), lesquels présentent un espace libre (H), dans lequel les préformes en plastique (10) sont façonnées à l'intérieur de l'espace libre (H) des postes de façonnage (4) pour en faire des contenants en plastique (20), en ce que les préformes en plastique (10) sont sollicitées et dilatées avec un milieu apte à l'écoulement, dans lequel les postes de façonnage (4) présentent en outre un équipement de sollicitation (30), moyennant quoi les préformes en plastique (10) sont sollicitées avec le milieu apte à l'écoulement, dans lequel le milieu apte à l'écoulement est guidé avec au moins une conduite de liaison vers l'équipement de sollicitation (30),
dans lequel au moins une section de ces conduites de liaison est sollicitée au moins par intermittence avec un milieu de stérilisation d'un dispositif de stérilisation (6),
**caractérisé en ce que**
les postes de façonnage (4) présentent un équipement de fermeture (38), lequel présente un élément de fermeture (34) pouvant être déplacé et rentré par pivotement, moyennant quoi l'équipement de sollicitation (30) peut être fermé pendant un processus de stérilisation, dans lequel l'élément de fermeture (34) étanchéifie l'équipement de sollicitation (30) de telle sorte qu'un milieu de stérilisation ne puisse sortir de celui-ci ni parvenir dans les préformes en plastique (10) ou d'autres régions du dispositif (1) pour façonner des préformes en plastique afin d'en faire des contenants en plastique.
